# FASCICULE DE BREVET EUROPEEN

(11) **EP 0 404 647 B1**
(45) Date de publication et mention de la délivrance du brevet: **10.05.1995**
(21) Numéro de dépôt: 90401681.3
(22) Date de dépôt: 15.06.1990
(51) Int. Cl.: B01D 19/02, B01D 19/00, D21D 5/26

(54) **Dispositif de désaération de liquides**
Vorrichtung zur Flüssigkeitsentgasung
Apparatus of liquid degassing

(30) Priorité: 21.06.1989 FR 8908247
(43) Date de publication de la demande: 27.12.1990
(73) Titulaire: E & M LAMORT, F-51300 Vitry le François (FR)
(72) Inventeur: Lamort, Jean-Pierre, F-51300 Vitry Le Francois (FR)
(74) Mandataire: Loyer, Bertrand

(56) Documents cités:
- EP-A- 0 147 215
- EP-A- 0 249 856
- DE-A- 3 038 428
- DE-C- 748 712
- SU-A- 511 337
- US-A- 1 973 864
- PATENT ABSTRACTS OF JAPAN, vol. 6, no. 3 (C-86)[881], 9 janvier 1982; JP-A-56129011 (TANAKA SHIYOKUHIN KIKAI K.K.) 08-10-1981
- SOVIET INVENTIONS ILLUSTRATED, semaine 8708, 4 avril 1987, section C, no. 87-055600/08, Derwent Publications Ltd, Londres, GB; & SU-A-1242199 (APPLD. BIOCHEM. RES.) 07-07-1986

## Description

La présente invention concerne un procédé et un dispositif de désaération de liquide et notamment de pâte à papier.

La pâte à papier réalisée à partir de vieux papiers comporte généralement, après les traitements de désintégration et d'épuration primaire, une étape d'éclaircissement de la pâte, par extraction des pigments, et des encres, encore appelée désencrage.

Ce désencrage est réalisé habituellement par la technique de flottation: la pâte à papier est injectée sous pression dans une cuve à travers des injecteurs mélangeurs qui forment une mousse dont les bulles captant les encres. La mousse est ensuite séparée du reste de la pâte par flottation lente ou rapide suivant le dispositif utilisé, et prélevé.

Cette technique de la flottation par production de mousse peut également être utilisée pour les contaminants de faibles dimensions et poids, autres que l'encre.

Cependant, si cette technique donne de bons résultats sur la qualité du désencrage de la pâte, elle présente des inconvénients au niveau du traitement de la mousse extraite.

En effet, la mousse une fois prélevée doit être cassée, c'est-à-dire désaérée, tout d'abord pour réduire l'important volume qu'elle occupe, ensuite pour séparer l'air de la fraction de pâte qu'elle contient afin de la recycler.

La mousse est détruite généralement dans des appareils séparateurs connus qui fonctionnent. Cependant, le liquide recueilli présente encore une quantité importante d'air sous forme de très nombreuses bulles de très faibles dimensions; la densité de la pâte est de l'ordre de 0,7 à 0,5.

Et ce liquide que l'on veut réutiliser est difficile à transporter du fait précisément de cette présence d'air: il forme des poches d'air dans les conduites qui empêchent l'utilisation de pompes classiques. Il faut alors prévoir des pompes volumétriques d'un coût élevé.

La présente invention a pour objectif de réaliser un appareil qui désaère totalement les liquides, non pas par extraction forcée de l'air sous forme de bulles, mais par extraction et libération de l'air contenu dans la liquide et dans les bulles, qui pourraient se former, de telle sorte quelle que soit la quantité d'air contenu dans le liquide, ce liquide après traitement ne présente plus aucune trace d'air.

L'invention a pour objet un dispositif de désaération de liquide et notamment de pâte à papier selon le revendication 1.

Le dispositif selon des modes préférées est encore remarquable par les caractéristiques suivantes:
Il comporte:
- des moyens de régulation du débit de liquide en sortie afin de contrôler la durée de l'agitation du liquide;
- le volume clos est une enceinte de forme générale cylindrique, l'arbre du rotor s'étend le long de l'axe de révolution du volume, les moyens de centrifugation sont des ailettes ou aubes, de préférence radiales et la conduite de sortie de l'air est disposée dans l'axe de révolution;
- l'enveloppe perforée est cylindrique, de même axe de révolution que l'axe du volume;
- les moyens d'agitation intense sont constitués d'éléments de surface et d'ouvertures permettant la circulation radiale du liquide, les éléments de surface étant portés par les moyens de centrifugation;
- les moyens d'agitation intense sont constitués d'un tambour de préférence de forme générale cylindrique, mobile en rotation avec le rotor, porté par l'extrémité des aubes de centrifugation, comportant une pluralité d'ouvertures radiales ou perforations;
- les sections des perforations de l'enveloppe sont très inférieures à celles du tambour, de telle sorte que la résistance à l'écoulement à travers le tambour soit négligeable devant la résistance à l'écoulement à travers l'enveloppe, afin que le tambour en mouvement reste plongé dans le liquide et l'agite pendant la durée nécessaire à sa désaération;
- de préférence les perforations du tambour et de l'enveloppe sont en général des trous mais pourraient être des fentes; et le diamètre des trous de l'enveloppe est environ cinq fois inférieur à celui des trous du tambour.

D'autres caractéristiques de l'invention ressortiront de la description qui va suivre.

La présente invention apporte les avantages suivants:
- le liquide en sortie est totalement désaéré: il n'y a plus aucune trace d'air, ce qui n'est pas le cas après décantation, même lorsque la durée de décantation est longue;
- la désaération est très rapide: une agitation de quelques instants suffit;
- l'enveloppe agit également comme tamis de filtration ce qui permet de séparer les grosses impuretés qui pourraient boucher des injecteurs, notamment lorsque le liquide, désaéré est destiné à subir un nouveau désencrage;
- les perforations de l'enveloppe peuvent être très fines et la dispositif peut alors être utilisé également comme un classeur de fibres, une partie seulement des fibres traversant l'enveloppe, et l'autre partie séparée en vue d'un traitement ultérieur.

Afin de mieux comprendre l'invention on a illustré au dessin annexé un exemple de réalisation de l'invention, dans lequel:
- la figure 1 est une vue schématique en coupe longitudinale du dispositif selon l'invention dans une première variante de réalisation;
- la figure 2 est une vue schématique en coupe longitudinale du dispositif selon l'invention dans une seconde variante de réalisation;
- la figure 3 est une vue en perspective d'un tambour de centrifugation et d'agitation salon l'invention;
- la figure 4 est une vue en coupe transversale du tambour de la figure 3;
- la figure 5 est une vue en perspective d'une variante de réalisation du tuba collecteur d'air selon l'invention.

Comme on le voit sur le dessin, le dispositif de désaération selon l'invention comporte un volume clos 1 de préférence cylindrique d'axe 2 de révolution, muni d'une conduite d'entrée 3 de pâte aérée, d'une conduite de sortie 4 de pâte désaérée, et d'une conduite 5 d'évacuation d'air.

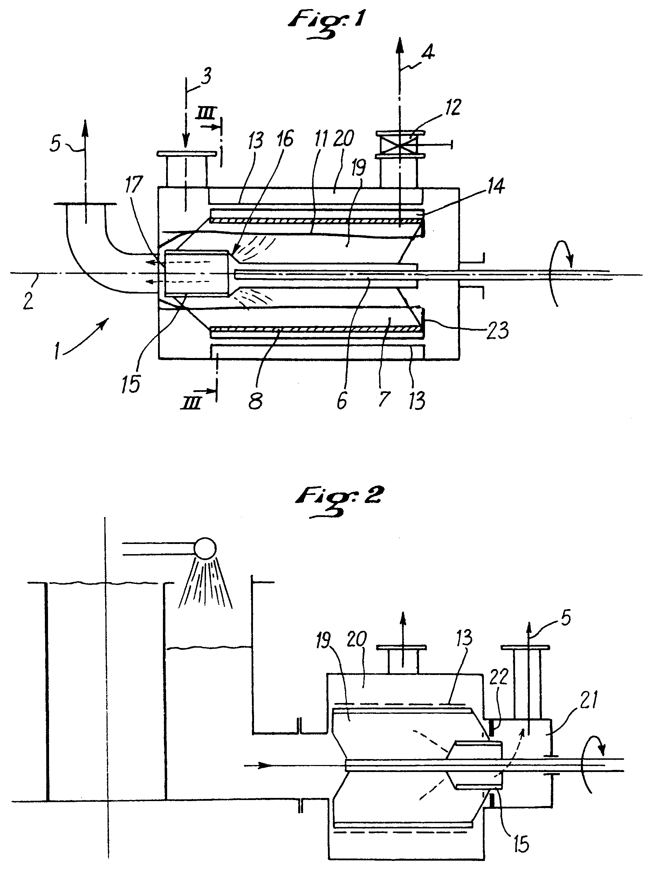

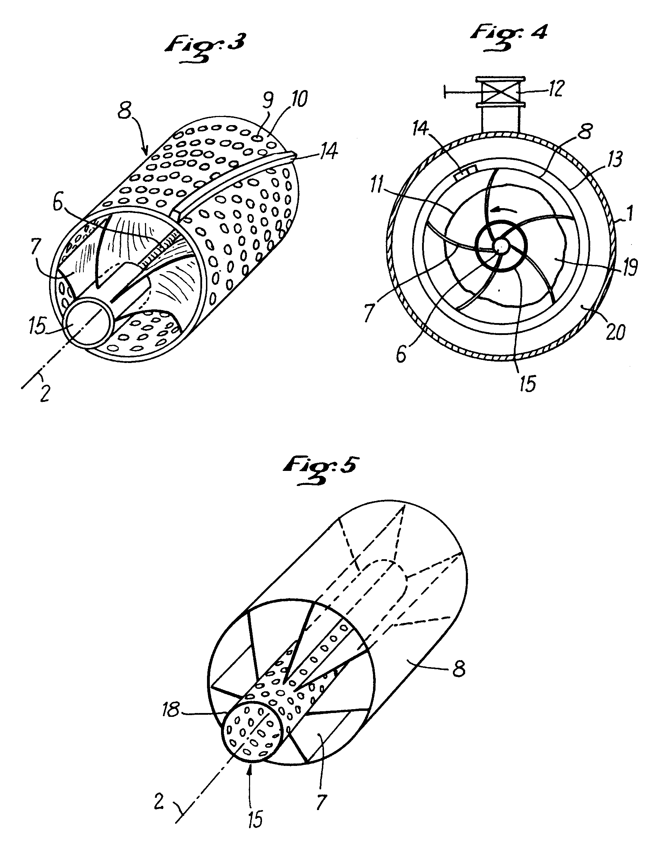

A l'intérieur de ce volume 1, on dispose un rotor comportant un arbre 6 qui s'étend dans l'axe 2 de révolution du volume 1. Cet arbre porte des moyens de centrifugation et des moyens d'agitation intense du liquide centrifugé. Dans l'exemple de réalisation les moyens de centrifugation sont des ailettes 7 ou aubes radiales droites; on peut également prévoir des aubes radiales courbes dont la forme est représentée sur la figure 3.

A l'extrémité des aubes 7, on dispose des éléments de surface destinés à créer des turbulences importantes dans la pâte projetée par centrifugation vers les parois de la cuve.

Dans l'exemple de réalisation cas éléments de surfaces sont constitués d'un tambour 8, de forme générale cylindrique, coaxial à l'axe de révolution 2, comportant une multitude de perforations 9.

Ce tambour constitue un moyens d'agitation en ce sens que la pâte, violemment centrifugée par les aubes 7 frappe en partie les éléments de surface 10 du tambour (c'est-à-dire la partie non perforée), le restant traversant les perforations 9. Le débit de pâte est réglé de telle sorte que le niveau 11 de pâte soit suffisamment pour que la surface du tambour reste constamment noyée dans la pâte.

Ainsi cette surface perforée se déplace dans une pâte, soumise à une force centrifuge.

Les dimensions des perforations sont telles que la pâte, après projection centrifuge, ne pouvant s'écouler et s'éloigner des aubes, revient vers le tambour et le traversant, est à nouveau soumise à son agitation violente.

La tambour, n'est qu'une variante de réalisation et peut être remplacé par tout autre ensemble équivalent, constituant une enveloppe cylindrique comportant des éléments de surface que la pâte vient heurter, ce qui semble casser les bulles et libérer l'air qui, sous l'effet du gradient de pression dû à la centrifugation, se déplace vers la centre, et des perforations pour laisser la pâte circuler à travers cette enveloppe cylindrique d'agitation.

D'autre part, on peut également au sens de l'invention prévoir un tambour de forme de révolution conique.

Le dispositif comporte des moyens de régulation du débit du liquide désaéré.

Il est en effet nécessaire que la pâte soit agitée pendant un temps suffisamment long pour que la désaération soit complète.

A cet effet, on maintient la pâte dans le volume en réduisant le débit en sortie.

Dans une première variante on dispose une simple vanne 12 sur la conduite de sortie 4. Cependant, en pratique il faut que le débit en entrée soit constant ce qui n'est pas le cas notamment du fait, que le liquide à l'entrée contient une grande proportion d'air. En conséquence, la quantité de pâte dans le volume 1 peut varier très rapidement et l'épaisseur de l'anneau de pâte centrifugée peut diminuer au point que la tambour d'agitation n'est plus noyé dans la pâte.

Pour remédier à cette difficulté on dispose avantageusement autour du rotor une enveloppe perforée 13, qui sépare la volume 1 en deux zones: une zone d'entrée 19 comportant les moyens mécaniques de désaération: le rotor avec son arbre, ses aubes, et le tambour, et une zone de sortie 20 et de repos du liquide désaéré.

Cette enveloppe 13 a pour fonction de coopérer à la régulation du débit de liquide aéré: à cette fin les dimensions des perforations, trous ou autres formes, sont choisies de telle sorte que leur section soit très inférieure à celle du tambour. La perte de charge dans le tambour est alors insensible devant la perte de charge de l'enveloppe. La pâte est alors retenue dans la zone d'entrée contre l'enveloppe, qu'elle traverse lentement, et elle forme un cylindre d'épaisseur assez stable dans lequel la tambour est noyé.

De préférence, le diamètre des perforations de l'enveloppe est environ de cinq fois inférieur au diamètre des perforations du tambour. A titre d'exemple non limitatif, les perforations de l'enveloppe peuvent avoir un diamètre de 1 à 5 millimètre pour des perforations du tambour de 5 à 25 millimètre de diamètre; mais les perforations de l'enveloppe peuvent être plus fines avec un diamètre inférieur à 1 millimètre.

En outre, on dispose sur le rotor, à l'extrémité radiale, au moins une pale 14 destinée à balayer la surface interne de l'enveloppe afin d'éviter son colmatage. Dans l'exemple illustré cette pale est disposée sur la surface du tambour et s'étend sur toute la longueur.

D'autre part, on prévoit un tube 15 collecteur de l'air extrait de la pâte. Ce tube est disposé coaxialement à l'axe 2 de révolution du rotor, du côté de la conduite 5 de sortie de l'air. Ce tube détermine une zone de tranquilisation de l'air; en effet l'air extrait par la combinaison de l'agitation et de la centrifugation subit, pendant son mouvement centripète, l'action des aubes. Le tube, porté par les aubes est ouvert à ses deux extrémités 16,17 et l'air peut y pénétrer librement. L'intérieur, du tube ne comporte pas d'aubes et l'air qui s'y trouve n'est donc pas soumis à une centrifugation.

Ce tube s'étend du côte de la sortie d'air, afin de le guider vers la conduite 5 de sortie, mais il peut s'étendre également sur une plus grande proportion de l'arbre 6 et même constituer l'arbre. Dans ce cas, par exemple (figure 5), le tube peut porter les aubes 7 et comporter sur sa surface des perforations 18 de circulation de l'air.

Le dispositif illustré sur la figure 1 représente une première variante de réalisation: l'entrée de la pâte aérée, est disposée à une extrémité du volume, perpendiculairement à l'axe du volume. La conduite de sortie 4 de pâte désaérée est disposée du côté de l'extrémité opposée, de manière que la pâte parcourre toute la longueur du cylindre avant d'être évacuée.

La conduite 5 d'évacuation de l'air est disposée dans l'axe 2 du côté de la conduite 3 d'admission de pâte, à l'opposé des organes d'entraînement du rotor.

Dans la variante de réalisation illustrée sur la figure 2, la conduite d'entrée de pâte est située dans l'axe 2 du volume, du côté opposé aux organes d entraînement du rotor, et l'évacuation de l'air se fait du côté desdits organes d'entraînement. Le tube collecteur d'air débouche dans un caisson 21 de réception d'air solidaire de l'enceinte où est disposée la conduite 5.

En outre, on dispose à l'entrée du caisson 21 de réception d air une paroi en forme de couronne 22 destinée à maintenir la pâte dans le cylindre sous l'action centrifuge; et à l'empêcher d'en sortir et de pénétrer dans ledit caisson.

Une telle couronne peut également être prévue dans l'exemple de la figure 1, référence 23; elle est montée dans ce cas à l'extrémité du tambour 8 et s'étend vers l'axe central 2 pour former un bord de retenue de l'ordre de 20 à 30 millimètres.

Le dispositif, selon cette invention, présente de nombreux avantages:
- le volume fonctionne indifféremment avec un cylindre horizontal ou vertical;
- l'enceinte peut être de forme quelconque, en présence d'une enveloppe perforée. C'est cette dernière qui doit être cylindrique et coaxiale à l'axe du rotor afin de déterminer un cylindre de pâte centrifugée d'épaisseur régulière;
- la désaération est pratiquement totale ou au moins très suffisante en vue de son transfert ultérieur dans les conduites de l'installation de traitement; et cela qu'elle que soit la qualité du liquide à l'entrée: que ce soit de l'eau ou une pâte très chargée en produits chimiques et en air;
- l'enveloppe perforée a en outre un effet de filtration ce qui permet d'éviter aux impuretés de sortie du volume et d'être introduites dans les injecteurs de la cellule de désencrage suivant;
- l'enveloppe perforée a une fonction de régulation automatique du débit ce qui permet de mettre en oeuvre le dispositif sans aucun dispositif préalable de régularisation du débit d'alimentation.

## Revendications

1. Dispositif de désaération de liquide et notamment de pâte à papier caractérisé en ce qu'il comporte:
- un volume clos (1) définissant un circuit de liquide entre une conduite (3) d'entrée du liquide aéré et une conduite de sortie (4) du liquide désaéré;
- un rotor comportant un arbre (6) s'étendant dans le volume clos (1), l'arbre portant des moyens (7) de centrifugation du liquide;
- un tambour (8) muni de perforations (9) porté par l'arbre (6) et interposé sur le circuit de liquide entre les conduits d'entrée (3) et de sortie (4);
- une enveloppe perforée (13), solidaire du volume clos (1) munie de perforations dont les dimensions sont inférieures à celles (9) du tambour (8) et interposée sur le circuit de liquide entre le tambour (8) et le conduite de sortie (4);
- un conduit (5) relié à un orifice d'évacuation d'air du volume clos (1) dans une zone centrale définie autour de l'arbre (6);
de telle sorte que se produise une centrifugation, une agitation violente par le tambour (8) et une friction intense entre le tambour (8) et l'enveloppe perforée (13), ce qui a pour effet de casser les bulles et libérer l'air qui sous l'effet de la pression due à la centrifugation se rassemble dans la zone centrale et est évacué par le conduit (5).

2. Dispositif de désaération de liquide selon la revendication 1 caractérisé en ce qu'il comporte des moyens (12,13) de régulation du débit en sortie de liquide désaéré afin de contrôler la durée de l'agitation du liquide.

3. Dispositif de désaération de liquide selon la revendication 1 caractérisé en ce que :
- le volume clos (1) est une enceinte de forme générale cylindrique;
- l'arbre (6) du rotor s'étend le long de l'axe (2) de révolution du volume;
- les moyens de centrifugation sont des ailettes ou aubes (7) radiales;
- la conduite de sortie d'air est disposée dans l'axe de révolution.

4. Dispositif de désaération de liquide selon la revendication 3 caractérisé en ce que l'enveloppe (13) perforée, de séparation du volume, est cylindrique et de même axe (2) de révolution que l'axe du volume (1).

5. Dispositif de désaération de liquide selon la revendication 4 caractérisé en ce que les sections des perforations de l'enveloppe sont très inférieures à celles du tambour de telle sorte que la perte de charge dans le tambour soit négligeable devant celle de l'enveloppe afin que le tambour en mouvement reste plongé dans le liquide en l'agitant le temps nécessaire à sa désaération.

6. Dispositif de désaération de liquide selon la revendication 5 caractérisé en ce que le diamètre des perforations de l'enveloppe est environ 5 fois inférieur au diamètre des perforations du tambour.

7. Dispositif de désaération de pâte à papier selon la revendication 4 caractérisé en ce que les moyens d'agitation comportent au moins une pale (14) longitudinale, s'étendant sur toute la longueur de l'enveloppe (13), perforée, destinée au décolmatage de ladite enveloppe.

8. Dispositif de désaération de liquide selon la revendication 2 caractérisé en ce qu'il comporte en sortie de liquide une vanne de réglage de débit (12).

9. Dispositif de désaération de liquide selon l'une quelconque des revendications 1 à 8 caractérisé en ce que la conduite d'entrée (3) est disposée dans l'axe (2) de l'arbre du rotor.

10. Dispositif de désaération de liquide selon la revendication 3 caractérisé en ce qu'à proximité immédiate de la conduite de sortie d'air (5) les aubes (7) de centrifugation portent un tube (15) coaxial à l'arbre du rotor, destiné à recevoir et guider l'air extrait du liquide.

## Claims

1. Device for deaerating liquid, especially paper pulp, comprising:
- an enclosed space (1) defining a liquid circuit between an inlet pipe (3) for aerated liquid and an outlet pipe (4) for deaerated liquid;
- a rotor comprising a shaft (6) which extends in the enclosed space (1), the shaft carrying means (7) for the centrifugation of the liquid;
- a drum (8) provided with perforations (9) which is carried by the shaft (6) and is interposed in the liquid circuit between the inlet pipe (3) and the outlet pipe (4);
- a perforated casing (13) which is integral with the enclosed space (1) and is provided with perforations, the dimensions of which are smaller than those (9) of the drum (8), and which is interposed in the liquid circuit between the drum (8) and the outlet pipe (4);
- a pipe (5) connected to an opening for the evacuation of air from the enclosed space (1) in a defined central zone around the shaft (6); in such a manner as to produce centrifugation, vigorous agitation by the drum (8) and intense friction between the drum (8) and the perforated casing (13), the effect of which is to break the bubbles and free the air which, under the effect of the pressure resulting from centrifugation, collects in the central zone and is evacuated via the pipe (5).

2. Device for deaerating liquid according to Claim 1, characterised in that it comprises means (12, 13) for regulating the rate of discharge of deaerated liquid in order to control the duration of the agitation of the liquid.

3. Device for deaerating liquid according to Claim 1, characterised in that:
- the enclosed space (1) is an enclosure having a generally cylindrical shape;
- the shaft (6) of the rotor extends along the axis (2) of rotation of the space;
- the centrifugation means are radial fins or paddles (7);
- the air outlet pipe is arranged on the axis of rotation.

4. Device for deaerating liquid according to Claim 3, characterised in that the perforated casing (13) for separating the space is cylindrical and its axis (2) of rotation is the same as that of the space (1).

5. Device for deaerating liquid according to Claim 4, characterised in that the sections of the perforations of the casing are much smaller than those of the drum, with the result that the loss of charge in the drum is negligible compared with that of the casing, so that the drum, when moving, remains immersed in the liquid while agitating the latter for the time necessary for its deaeration.

6. Device for deaerating liquid according to Claim 5, characterised in that the diameter of the perforations of the casing is approximately five times smaller than the diameter of the perforations of the drum.

7. Device for deaerating paper pulp according to Claim 4, characterised in that the agitating means comprise at least one longitudinal blade (14) which extends along the entire length of the perforated casing (13) and is intended to clean the said casing.

8. Device for deaerating liquid according to Claim 2, characterised in that it comprises a flow-regulating valve (12) at the liquid outlet.

9. Device for deaerating liquid according to any one of Claims 1 to 8, characterised in that the inlet pipe (3) is arranged on the axis (2) of the rotor shaft.

10. Device for deaerating liquid according to Claim 3, characterised in that, in the immediate vicinity of the air outlet pipe (5), the centrifugation paddles (7) carry a tube (15) which is coaxial with the rotor shaft and is intended to receive and guide the air extracted from the liquid.

## Patentansprüche

1. Vorrichtung zur Entlüftung von Flüssigkeit und insbesondere von Papierbrei, **dadurch gekennzeichnet**, daß sie folgende Merkmale enthält:
- ein geschlossenes Volumen (1), das zwischen einer Einlaßleitung (3) für lufthaltige Flüssigkeit und einer Auslaßleitung (4) für entlüftete Flüssigkeit einen Flüssigkeitskreislauf festlegt;
- einen Rotor mit einer Welle (6), die im geschlossenen Volumen (1) verläuft und Mittel (7) zum Zentrifugieren der Flüssigkeit trägt;
- eine Trommel (8), die mit Löchern (9) versehen ist, von der Welle (6) getragen wird und im Flüssigkeitskreislauf zwischen der Einlaßleitung (3) und der Auslaßleitung (4) angeordnet ist;
- eine mit Löchern versehene Ummantelung (13), die am geschlossenen Volumen (1) befestigt ist, deren Löcher kleinere Abmessungen als die Löcher (9) der Trommel (8) aufweisen und die im Flüssigkeitskreislauf zwischen der Trommel (8) und der Auslaßleitung (4) angebracht ist, und
- eine Leitung (5), die an eine Luftauslaßöffnung des geschlossenen Volumens (1) in einem zentralen Bereich, der um die Welle (6) festgelegt ist, derart angeschlossen ist, daß ein Zentrifugieren, eine starke Bewegung durch die Trommel (8) sowie eine intensive Reibung zwischen der Trommel (8) und der mit Löchern versehenen Ummantelung (13) entsteht, wodurch die Blasen zerquetscht werden und die Luft freigesetzt wird, die unter der Einwirkung des vom Zentrifugieren herrührenden Druckes sich in dem zentralen Bereich sammelt und durch die Leitung (5) abgezogen wird.

2. Vorrichtung zur Entlüftung von Flüssigkeit nach Anspruch 1, dadurch gekennzeichnet, daß sie Mittel (12, 13) zur Dosierung der Auslaßmenge an entlüfteter Flüssigkeit aufweist, um die Dauer der Bewegung der Flüssigkeit zu steuern.

3. Vorrichtung zur Entlüftung von Flüssigkeit nach Anspruch 1, dadurch gekennzeichnet, daß
- das geschlossene Volumen (1) eine Einfassung von allgemein zylindrischer Form ist;
- die Welle (6) des Rotors entlang der Hauptachse (2) des Volumens verläuft;
- die Mittel zum Zentrifugieren radial verlaufende Flügel oder Schaufeln (7) sind, und
- die Luftauslaßleitung in der Hauptachse angeordnet ist.

4. Vorrichtung zur Entlüftung von Flüssigkeit nach Anspruch 3, dadurch gekennzeichnet, daß die mit Löchern versehene Ummantelung (13), die das Volumen aufteilt, zylindrisch ausgebildet ist und dieselbe Hauptachse (2) wie das Volumen (1) aufweist.

5. Vorrichtung zur Entlüftung von Flüssigkeit nach Anspruch 4, dadurch gekennzeichnet, daß die Querschnitte der Löcher der Ummantelung sehr viel kleiner als die der Löcher der Trommel sind, so daß der Druckverlust in der Trommel vernachlässigbar gegenüber dem der Ummantelung ist, damit die in Bewegung befindliche Trommel in der Flüssigkeit eingetaucht bleibt, während sie diese so lange bewegt, wie es zu deren Entlüftung erforderlich ist.

6. Vorrichtung zur Entlüftung von Flüssigkeit nach Anspruch 5, dadurch gekennzeichnet, daß der Durchmesser der Löcher der Ummantelung etwa fünfmal kleiner als der der Löcher der Trommel ist.

7. Vorrichtung zur Entlüftung von Flüssigkeit nach Anspruch 4, dadurch gekennzeichnet, daß die Bewegungsmittel mindestens eine Längsschaufel (14) aufweisen, die sich über die gesamte Länge der mit Löchern versehenen Ummantelung (13) erstreckt und zu deren Reinigung dient.

8. Vorrichtung zur Entlüftung von Flüssigkeit nach Anspruch 2, dadurch gekennzeichnet, daß sie am Flüssigkeitsauslaß ein Dosierventil (12) für den Durchsatz aufweist.

9. Vorrichtung zur Entlüftung von Flüssigkeit nach einem der Ansprüche 1 bis 8, dadurch gekennzeichnet, daß die Einlaßleitung (3) auf der Achse (2) der Rotorwelle angeordnet ist.

10. Vorrichtung zur Entlüftung von Flüssigkeit nach Anspruch 3, dadurch gekennzeichnet, daß die Zentrifugier-Schaufeln (7) der Luftauslaßleitung (5) unmittelbar benachbart ein Rohr (15) tragen, das zur Rotorwelle koaxial verläuft und zur Aufnahme und zur Führung der aus der Flüssigkeit extrahierten Luft dient.
